# EUROPÄISCHE PATENTSCHRIFT

(11) **EP 1 947 007 B1**
(45) Veröffentlichungstag und Bekanntmachung des Hinweises auf die Patenterteilung: **16.01.2013**
(21) Anmeldenummer: 07000737.2
(22) Anmeldetag: 16.01.2007
(51) Int. Cl.: B64D 11/06

(54) **Sitzvorrichtung, insbesondere Fahrzeug- oder Flugzeugsitzvorrichtung**
Seat apparatus, especially vehicle or aircraft seat apparatus
Dispositif de siège, notamment de véhicule ou d'aéronef

(43) Veröffentlichungstag der Anmeldung: 23.07.2008
(73) Patentinhaber: Recaro Aircraft Seating GmbH & Co. KG, 74523 Schwäbisch Hall (DE)
(72) Erfinder: Speh, Andreas, 88444 Ummendorf (DE); Schweizer, Oliver, 88161 Lindenberg (DE); Baumann, Jürgen, 78351 Bodman-Ludwigshafen (DE)
(74) Vertreter: Daub, Thomas

(56) Entgegenhaltungen:
- EP-A- 0 336 852
- DE-A1-102005 022 694
- FR-A- 976 199

## Beschreibung

### Stand der Technik

Die Erfindung geht aus von einer Sitzvorrichtung nach dem Oberbegriff des Anspruchs 1.

Aus der DE 10 2005 022 694 A1 ist eine gattungsbildende Sitzvorrichtung mit einer Sitzbodenlagereinheit bekannt, die dazu vorgesehen ist, einen Sitzboden beweglich zu lagern.

### Vorteile der Erfindung

Die Erfindung geht aus von einer Sitzvorrichtung, insbesondere einer Fahrzeug- oder Flugzeugsitzvorrichtung, mit einer Sitzbodenlagereinheit, die dazu vorgesehen ist, einen Sitzboden beweglich zu lagern.

Es wird vorgeschlagen, dass die Sitzbodenlagereinheit wenigstens ein beweglich gelagertes Versteifungsmittel umfasst, das in Querrichtung der Sitzbodenlagereinheit wenigstens zwei Koppelstellen aufweist. Das Versteifungsmittel kann ferner besonders Platz sparend integriert und ein vorteilhafter Kraftfluss erreicht werden, wenn das Versteifungsmittel mit zumindest einem beweglich gelagerten Hebel der Sitzbodenlagereinheit gekoppelt ist und vorzugsweise zwei beweglich gelagerte Hebel der Sitzbodenlagereinheit miteinander koppelt, und insbesondere, wenn das Versteifungsmittel drehfest mit zumindest einem Hebel verbunden und/oder das Versteifungsmittel koaxial zu einer Schwenkachse eines Hebels der Sitzbodenlagereinheit angeordnet ist. Dabei soll unter "Querrichtung der Sitzbodenlagereinheit" insbesondere eine Richtung verstanden werden, die zumindest eine Komponente von einem Sitzbodenseitenbereich in einen zweiten Sitzbodenseitenbereich und/oder insbesondere zumindest eine Komponente parallel zu einer Sitzbodenvorderkante aufweist. Unter einer "Koppelstelle" soll insbesondere eine Stelle verstanden werden, die dazu vorgesehen ist, das Versteifungsmittel mit einem korrespondierenden Bauteil zu verbinden. Unter einer "beweglichen Lagerung" des Versteifungsmittels, soll insbesondere verstanden werden, dass das Versteifungsmittel dazu vorgesehen ist, bei einer Bewegung der Sitzbodenlagereinheit zumindest eine Bewegung relativ zu einem Lagermittel der Sitzbodenlagereinheit auszuführen. Ferner soll unter "vorgesehen" insbesondere speziell ausgestattet und/oder ausgelegt verstanden werden.

Durch eine entsprechende Ausgestaltung können Gewicht, Bauteile, Kosten und/oder Montageaufwand eingespart werden. Insbesondere kann eine Fixiereinheit vorgesehen werden, die zur Verriegelung der Sitzbodenlagereinheit in zumindest einer Stellung vorgesehen ist und die nur ein einzelnes, einseitig, insbesondere in einem einzelnen ersten Sitzbodenseitenbereich, angeordnetes Fixiermittel aufweist. In einem zweiten Sitzbodenseitenbereich kann ein Fixiermittel vermieden und damit verbunden können Bauteile, Gewicht, Kosten und Montageaufwand eingespart werden.

In einer weiteren Ausgestaltung der Erfindung wird vorgeschlagen, dass sich das Versteifungsmittel von einem ersten Sitzbodenseitenbereich über einen mittleren Sitzbodenbereich in einen gegenüberliegenden zweiten Sitzbodenseitenbereich erstreckt, wodurch vorteilhaft die beiden Sitzbodenseitenbereiche über das Versteifungsmittel gekoppelt werden können und auf den einen Sitzbodenseitenbereich wirkende Kräfte und/oder Momente auf den anderen Sitzbodenseitenbereich mittels des Versteifungsmittels übertragen werden können und damit eine Versteifung erreicht werden kann.

Ferner wird vorgeschlagen, dass das Versteifungsmittel von einer Torsionsstange gebildet ist, die zur Übertragung eines Torsionsmoments vorgesehen ist, wodurch ein vorteilhafter Kraftfluss erzielt werden kann. Ferner kann mit einem von einer Torsionsstange gebildeten Versteifungsmittel eine an dem einen Sitzbodenseitenbereich eingebrachte Kraft besonders Platz sparend an den zweiten Sitzbodenseitenbereich übertragen werden.

Vorzugsweise ist das Versteifungsmittel von einem Rohr gebildet, wodurch ein Bauteil mit einer hohen Steifigkeit, insbesondere einer hohen Verdrehsteifigkeit, und einem geringen Gewicht erreicht werden kann, das vorteilhaft zur Übertragung eines Drehmoments bzw. Torsionsmoments geeignet ist, und zwar insbesondere, wenn dieses mit einer runden Querschnittsfläche ausgeführt ist.

Ist das Versteifungsmittel zur Versteifung einer Rückenlehneneinheit vorgesehen, können weiter Gewicht, Bauteile, Kosten und/oder Montageaufwand eingespart werden, und zwar insbesondere, indem zumindest zwei Kinematikteile einer Rückenlehnenkinematikeinheit, über die die Rückenlehneneinheit mit einem Sitzgestell gekoppelt ist, über das Versteifungsmittel gekoppelt sind. Die Rückenlehneneinheit kann dadurch besonders leicht ausgeführt und dennoch kann eine hohe Verwindungssteifigkeit erreicht werden.

Die erfindungsgemäße Sitzvorrichtung eignet sich aufgrund der möglichen Gewichtsreduzierung insbesondere für einen Flugzeugsitz. Grundsätzlich ist eine entsprechende Sitzvorrichtung jedoch auch bei anderen, dem Fachmann als geeignet erscheinenden Sitzen einsetzbar, wie insbesondere bei Kraftfahrzeugsitzen, Sitzen für Hörsäle usw.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisch dargestellten Flugzeugsitz in einer Seitenansicht mit einer erfindungsgemäßen Sitzvorrichtung in einer ersten Stellung,
- Fig. 2: einen Ausschnitt des Flugzeugsitzes schräg von unten und

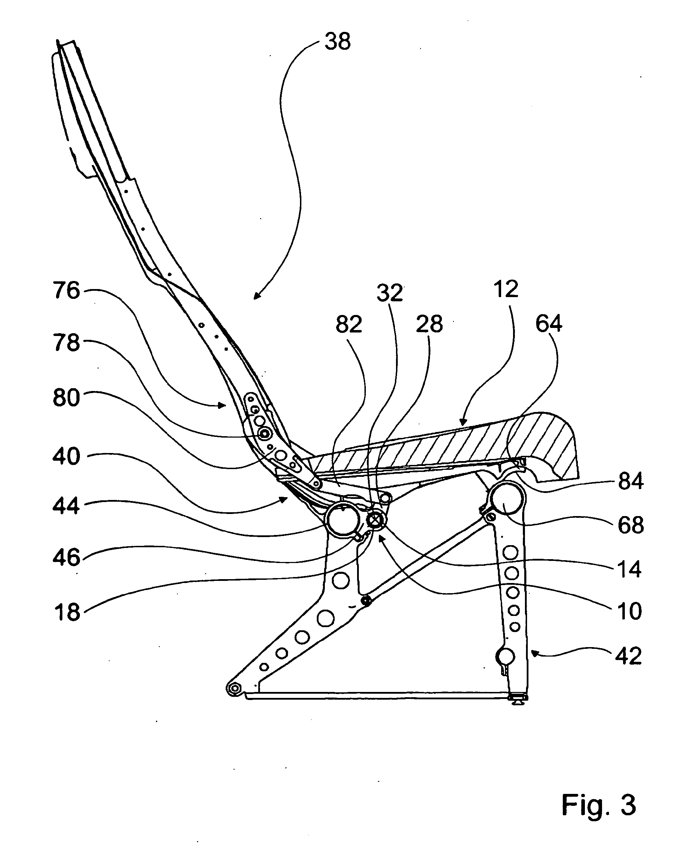

- Fig. 3: der Flugzeugsitz in der Seitenansicht in einer zweiten Stellung.

### Beschreibung des Ausführungsbeispiels

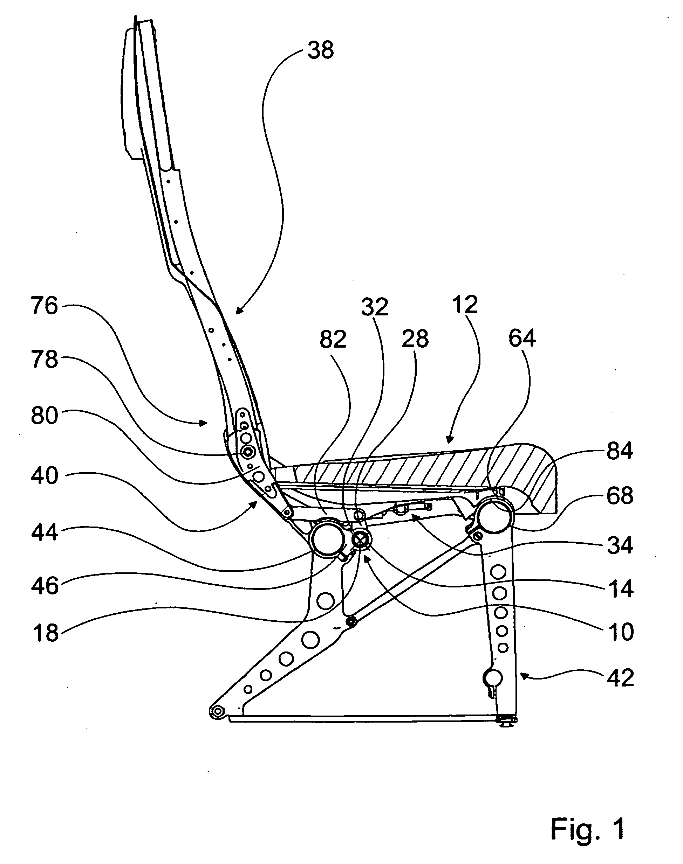

Figur 1 zeigt einen schematisch dargestellten Flugzeugsitz in einer Seitenansicht mit einer Sitzvorrichtung, die eine Sitzbodenlagereinheit 10 umfasst, die dazu vorgesehen ist, einen Sitzboden 12 des Flugzeugsitzes beweglich zu lagern. Der Sitzboden 12 ist über die Sitzbodenlagereinheit 10 mit einem Sitzgestell 42 gekoppelt, das dazu vorgesehen ist, auf einen Kabinenboden eines Flugzeugs aufgeständert zu werden.

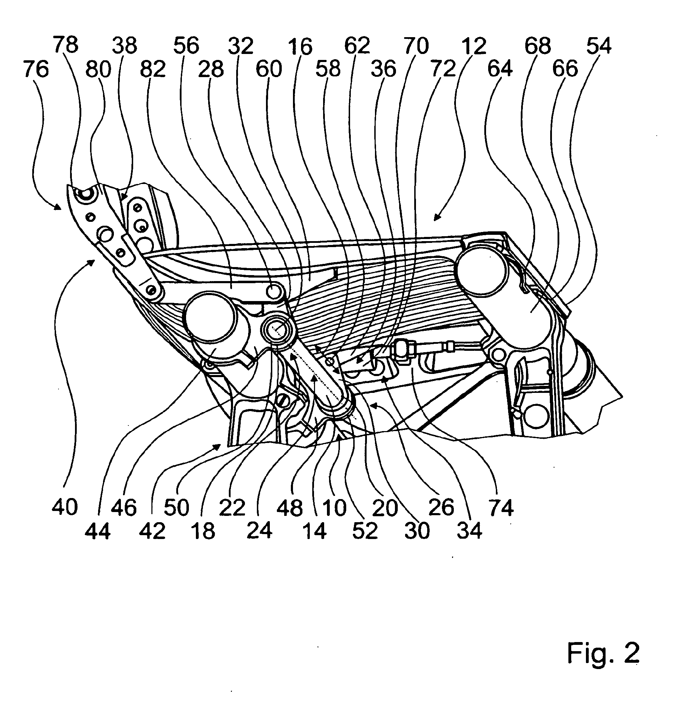

Die Sitzbodenlagereinheit 10 umfasst ein beweglich gelagertes Versteifungsmittel 14, das in Querrichtung 16 der Sitzbodenlagereinheit 10 bzw. parallel zu einer Sitzbodenvorderkante 54 sich von einem ersten Sitzbodenseitenbereich 22 über einen mittleren Sitzbodenbereich 24 in einen dem ersten Sitzbodenseitenbereich 22 gegenüberliegenden zweiten Sitzbodenseitenbereich 26 erstreckt und zwei Koppelstellen 18, 20 aufweist (vgl. Figur 2). Das Versteifungsmittel 14 wird dabei von einer rohrförmigen Torsionsstange mit einem runden Querschnitt gebildet, die zur Übertragung eines Torsionsmoments vorgesehen ist. An einem hinteren in Querrichtung 16 verlaufenden Tragrohr 44 ist im ersten Sitzbodenseitenbereich 22 ein erstes Lagermittel 46 und im zweiten Sitzbodenseitenbereich 26 ein zweites Lagermittel 48 befestigt, die jeweils eine Lagerstelle 50, 52 bilden, in denen das Versteifungsmittel 14 drehbar gelagert ist.

Die Sitzbodenlagereinheit 10 weist einen ersten im ersten Sitzbodenseitenbereich 22 in der ersten Koppelstelle 18 drehfest mit dem Versteifungsmittel 14 verbundenen ersten Hebel 28 und einen im zweiten Sitzbodenseitenbereich 26 in der zweiten Koppelstelle 20 drehfest mit dem Versteifungsmittel 14 verbundenen zweiten Hebel 30 auf. Die beiden Hebel 28, 30 sind über das Versteifungsmittel 14 miteinander gekoppelt bzw. antriebstechnisch verbunden. Die Hebel 28, 30 sind über das Versteifungsmittel 14 um eine Schwenkachse 32 schwenkbar gelagert, wobei das Versteifungsmittel 14 koaxial zur Schwenkachse 32 angeordnet ist. Die Hebel 28, 30 sind über Gelenkbolzen 56, 58 mit an einer Unterseite des Sitzbodens 12 einstückig angeformten Befestigungslaschen 60, 62 schwenkbar verbunden. Der Sitzboden 12 ist zusätzlich in seinem hinteren Bereich auf dem Tragrohr 44 und in seinem vorderen Bereich über in den Sitzboden 12 eingerastete Clips 64, 66 auf einem vorderen Tragrohr 68 abgestützt.

Ferner umfasst die Sitzvorrichtung eine Fixiereinheit 34, die zur Verriegelung der Sitzbodenlagereinheit 10 in mehreren Stellungen vorgesehen ist, wobei die Fixiereinheit 34 ein einzelnes, nur im zweiten Sitzbodenseitenbereich 26 angeordnetes Fixiermittel 36 aufweist. Im ersten Sitzbodenseitenbereich 22 ist kein Fixiermittel der Fixiereinheit 34 angeordnet. Das Fixiermittel 36 umfasst einen in einem Hydraulikzylinder 70 geführten Kolben, der über eine Kolbenstange 72 mit einem Trägerteil 74 des Sitzgestells 42 schwenkbar verbunden und an diesem abgestützt ist, während der Hydraulikzylinder 70 fest mit dem Hebel 30 schwenkbar verbunden und an diesem abgestützt ist.

Ferner umfasst die Sitzvorrichtung eine Rückenlehneneinheit 38 und eine Rückenlehnenkinematikeinheit 40, über die die Rückenlehneneinheit 38 mit dem Sitzgestell 42 gekoppelt ist, wobei das Versteifungsmittel 14 zur Versteifung der Rückenlehneneinheit 38 vorgesehen ist. Die Rückenlehnenkinematikeinheit 40 weist ein Hebelgetriebe 76 auf, das im Wesentlichen zu einer Mittelachse spiegelsymmetrisch ausgebildet ist, wobei im Wesentlichen nur eine Seite des Hebelgetriebes 76 in den Figuren sichtbar ist. Das Hebelgetriebe 76 weist seitlich jeweils einen ersten mit der Rückenlehneneinheit 38 starr verbundenen und um eine Schwenkachse 78 schwenkbaren Hebel 80 auf. Die seitlich angeordneten Hebel 80 sind jeweils mit einem Zwischenhebel 82 bzw. einer Koppel schwenkbar verbunden, die jeweils über die Gelenkbolzen 56, 58 mit den Hebeln 28, 30 und über die Hebel 28, 30 mit dem Versteifungsmittel 14 gekoppelt sind. Die Hebel 28, 30 sowie das Versteifungsmittel 14 sind damit ein Teil der Rückenlehnenkinematikeinheit 40 bzw. die Rückenlehnenkinematikeinheit 40 und die Sitzbodenlagereinheit 10 sind teilweise einstückig ausgebildet.

Tritt eine Handlast in einem Seitenbereich der Rückenlehneneinheit 38 auf, wird diese über die diesem Seitenbereich zugewandten Hebel 80, 82, 28 als Drehmoment bzw. Torsionsmoment auf das Versteifungsmittel 14 und über das Versteifungsmittel 14 auf den gegenüberliegenden Seitenbereich der Rückenlehneneinheit 38 übertragen, wodurch die Rückenlehneneinheit 38 in sich versteift wird, insbesondere gegenüber einer entsprechenden Ausgestaltung ohne dem Versteifungsmittel 14.

Wird von einem Passagier die Rückenlehneneinheit 38 von einer im Wesentlichen aufrechten Stellung (vgl. Figur 1) in eine nach hinten geneigte Stellung (vgl. Figur 2) bewegt, werden die Hebel 28, 30 nach vorne verschwenkt und der Sitzboden 12 gleitet auf den Tragrohren 44, 68 nach vorne und bedingt durch eine entsprechende Kontur des Sitzbodens 12 nach unten. Zusätzlich weisen die Clips 64, 66 eine rampenartige Kontur 84 auf, so dass der Sitzboden 12 durch die Bewegung nach vorne zusätzlich in seinem vorderen Bereich nach oben geführt wird. Der Sitzboden 12 führt damit eine kombinierte Bewegung aus, und zwar eine translatorische und eine rotatorische Bewegung. Ist eine gewünschte Position erreicht, werden die Rückenlehneneinheit 38 und der Sitzboden 12 in ihren Stellungen durch die Fixiereinheit 34 fixiert.

### Bezugszeichen

- 10: Sitzbodenlagereinheit
- 12: Sitzboden
- 14: Versteifungsmittel
- 16: Querrichtung
- 18: Koppelstelle
- 20: Koppelstelle
- 22: Sitzbodenseitenbereich
- 24: Sitzbodenbereich
- 26: Sitzbodenseitenbereich
- 28: Hebel
- 30: Hebel
- 32: Schwenkachse
- 34: Fixiereinheit
- 36: Fixiermittel
- 38: Rückenlehneneinheit
- 40: Rückenlehnenkinematikeinheit
- 42: Sitzgestell
- 44: Tragrohr
- 46: Lagermittel
- 48: Lagermittel
- 50: Lagerstelle
- 52: Lagerstelle
- 54: Sitzbodenvorderkante
- 56: Gelenkbolzen
- 58: Gelenkbolzen
- 60: Befestigungslasche
- 62: Befestigungslasche
- 64: Clip
- 66: Clip
- 68: Tragrohr
- 70: Hydraulikzylinder
- 72: Kolbenstange
- 74: Trägerteil
- 76: Hebelgetriebe
- 78: Schwenkachse
- 80: Hebel
- 82: Zwischenhebel
- 84: Kontur

## Patentansprüche

1. Sitzvorrichtung, insbesondere Fahrzeug- oder Flugzeugsitzvorrichtung, mit einem Sitzboden (12), einer Sitzbodenlagereinheit (10), die dazu vorgesehen ist, den Sitzboden (12) beweglich zu lagern, und einer Rückenlehneneinheit (38), die relativ zum Sitzboden (12) neigbar ist,
**dadurch gekennzeichnet,**
**dass** die Sitzbodenlagereinheit (10) wenigstens ein beweglich gelagertes Versteifungsmittel (14), das zur Versteifung der Rückenlehneneinheit (38) vorgesehen ist und in Querrichtung (16) der Sitzbodenlagereinheit (10) wenigstens zwei Koppelstellen (18, 20) aufweist, und wenigstens einen beweglich gelagerten Hebel (28, 30) umfasst, wobei das Versteifungsmittel (14) mit dem Hebel (28, 30) gekoppelt ist.

2. Sitzvorrichtung nach Anspruch 1,
**dadurch gekennzeichnet,**
**dass** sich das Versteifungsmittel (14) von einem ersten Sitzbodenseitenbereich (22) über einen mittleren Sitzbodenbereich (24) in einen gegenüberliegenden zweiten Sitzbodenseitenbereich (26) erstreckt.

3. Sitzvorrichtung nach einem der vorhergehenden Ansprüche,
**dadurch gekennzeichnet,**
**dass** das Versteifungsmittel (14) von einer Torsionsstange gebildet ist, die zur Übertragung eines Torsionsmoments vorgesehen ist.

4. Sitzvorrichtung nach Anspruch 1,
**dadurch gekennzeichnet,**
**dass** die Sitzbodenlagereinheit (10) wenigstens zwei beweglich gelagerte Hebel (28, 30) aufweist, die über das Versteifungsmittel (14) miteinander gekoppelt sind.

5. Sitzvorrichtung nach einem der Ansprüche 1 oder 4,
**dadurch gekennzeichnet,**
**dass** das Versteifungsmittel (14) mit zumindest einem Hebel (28, 30) der Sitzbodenlagereinheit (10) drehfest verbunden ist.

6. Sitzvorrichtung nach einem der vorhergehenden Ansprüche,
**dadurch gekennzeichnet,**
**dass** das Versteifungsmittel (14) koaxial zu einer Schwenkachse (32) eines Hebels (28, 30) der Sitzbodenlagereinheit (10) angeordnet ist.

7. Sitzvorrichtung nach einem der vorhergehenden Ansprüche,
**dadurch gekennzeichnet,**
**dass** das Versteifungsmittel (14) von einem Rohr gebildet ist.

8. Sitzvorrichtung nach einem der vorhergehenden Ansprüche,
**gekennzeichnet durch**
eine Fixiereinheit (34), die zur Verrieglung der Sitzbodenlagereinheit (10) in zumindest einer Stellung vorgesehen ist, wobei die Fixiereinheit (34) ein einzelnes, einseitig angeordnetes Fixiermittel (36) aufweist.

9. Sitzvorrichtung nach Anspruch 1,
**gekennzeichnet durch**
eine Rückenlehnenkinematikeinheit (40), über die die Rückenlehneneinheit (38) mit einem Sitzgestell (42) gekoppelt ist, wobei zumindest zwei Kinematikteile der Rückenlehnenkinematikeinheit (40) über das Versteifungsmittel (14) gekoppelt sind.

10. Sitz, insbesondere Fahrzeug- oder Flugzeugsitz mit einer Sitzvorrichtung nach einem der vorhergehenden Ansprüche.

## Claims

1. Seating apparatus, in particular vehicle or aircraft seating apparatus, with a seat base (12), a seat base bearing unit (10) which is provided for mounting the seat base (12) in a movable manner, and a backrest unit (38) which can be inclined relative to the seat base (12), **characterized in that** the seat base bearing unit (10) comprises at least one movably mounted stiffening means (14) which is provided for stiffening the backrest unit (38) and has at least two coupling points (18, 20) in the transverse direction (16) of the seat base bearing unit (10), and at least one movably mounted lever (28, 30), wherein the stiffening means (14) is coupled to the lever (28, 30).

2. Seating apparatus according to Claim 1, **characterized in that** the stiffening means (14) extends from a first seat base side region (22) over a central seat base region (24) into an opposite second seat base side region (26).

3. Seating apparatus according to one of the preceding claims, **characterized in that** the stiffening means (14) is formed by a torsion rod which is provided for transmitting a torsional moment.

4. Seating apparatus according to Claim 1, **characterized in that** the seat base bearing unit (10) has at least two movably mounted levers (28, 30) which are coupled to each other via the stiffening means (14).

5. Seating apparatus according to either of Claims 1 and 4, **characterized in that** the stiffening means (14) is connected in a rotationally fixed manner to at least one lever (28, 30) of the seat base bearing unit (10).

6. Seating apparatus according to one of the preceding claims, **characterized in that** the stiffening means (14) is arranged coaxially with a pivot axis (32) of a lever (28, 30) of the seat base bearing unit (10).

7. Seating apparatus according to one of the preceding claims, **characterized in that** the stiffening means (14) is formed by a tube.

8. Seating apparatus according to one of the preceding claims, **characterized by** a fixing unit (34) which is provided for locking the seat base bearing unit (10) in at least one position, wherein the fixing unit (34) has an individual fixing means (36) arranged on one side.

9. Seating apparatus according to Claim 1, **characterized by** a backrest kinematic unit (40) via which the backrest unit (38) is coupled to a seat frame (42), wherein at least two kinematic parts of the backrest kinematic unit (40) are coupled via the stiffening means (14).

10. Seat, in particular vehicle or aircraft seat, with a seating apparatus according to one of the preceding claims

## Revendications

1. Dispositif de siège, en particulier dispositif de siège de véhicule ou d'aéronef, comprenant une partie d'assise (12), une unité de support de partie d'assise (10), qui est prévue pour supporter de manière mobile la partie d'assise (12), et une unité de dossier (38) qui peut être inclinée par rapport à la partie d'assise (12),
**caractérisé en ce que**
l'unité de support de partie d'assise (10) présente au moins un moyen de raidissement (14) monté mobile, qui est prévu pour raidir l'unité de dossier (38), et au moins deux points d'accouplement (18, 20) dans la direction transversale (16) de l'unité de support de partie d'assise (10), et comprend au moins un levier (28, 30) monté mobile, le moyen de raidissement (14) étant accouplé au levier (28, 30).

2. Dispositif de siège selon la revendication 1,
**caractérisé en ce que**
le moyen de raidissement (14) s'étend depuis une première région latérale de partie d'assise (22) par le biais d'une région centrale de partie d'assise (24) jusque dans une deuxième région latérale de partie d'assise (26) opposée.

3. Dispositif de siège selon l'une quelconque des revendications précédentes,
**caractérisé en ce que**
le moyen de raidissement (14) est formé par une barre de torsion qui est prévue pour transférer un couple de torsion.

4. Dispositif de siège selon la revendication 1,
**caractérisé en ce que**
l'unité de support de partie d'assise (10) présente au moins deux leviers (28, 30) montés mobiles, qui sont accouplés l'un à l'autre par le biais du moyen de raidissement (14).

5. Dispositif de siège selon l'une quelconque des revendications 1 ou 4,
**caractérisé en ce que**
le moyen de raidissement (14) est connecté de manière solidaire en rotation à au moins un levier (28, 30) de l'unité de support de partie d'assise (10).

6. Dispositif de siège selon l'une quelconque des revendications précédentes,
**caractérisé en ce que**
le moyen de raidissement (14) est disposé coaxialement à un axe de pivotement (32) d'un levier (28, 30) de l'unité de support de partie d'assise (10).

7. Dispositif de siège selon l'une quelconque des revendications précédentes,
**caractérisé en ce que**
le moyen de raidissement (14) est formé par un tube.

8. Dispositif de siège selon l'une quelconque des revendications précédentes,
**caractérisé par**
une unité de fixation (34) qui est prévue pour verrouiller l'unité de support de partie d'assise (10) dans au moins une position, l'unité de fixation (34) présentant un moyen de fixation unique (36), disposé d'un côté.

9. Dispositif de siège selon la revendication 1,
**caractérisé par**
une unité cinématique de dossier (40), par le biais de laquelle l'unité de dossier (38) est accouplée à un bâti de siège (42), au moins deux pièces cinématiques de l'unité cinématique de dossier (40) étant accouplées par le biais du moyen de raidissement (14).

10. Siège, en particulier siège de véhicule ou d'aéronef comprenant un dispositif de siège selon l'une quelconque des revendications précédentes.
